# EUROPÄISCHE PATENTANMELDUNG

(11) **EP 1 908 626 A1**
(43) Veröffentlichungstag der Anmeldung: **09.04.2008**
(21) Anmeldenummer: 06021009.3
(22) Anmeldetag: 06.10.2006
(51) Int. Cl.: B60N 2/30, B64D 11/06

(54) **Flugzeugsitz**

(71) Anmelder: Lufthansa Technik AG, 22335 Hamburg (DE)
(72) Erfinder: Merensky, Harald, 22359 Hamburg (DE)
(74) Vertreter: Glawe, Delfs, Moll

(57) **Zusammenfassung**

Gegenstand der Erfindung ist ein Sitz für ein Verkehrsmittel, mit einer Sitzfläche und einer Rückenlehne. Erfindungsgemäß sind folgende Merkmale vorgesehen:
a. der Sitz weist einen Reboard-Sitzbügel (4) auf, der im unteren Bereich der Rückenlehne (3) und/oder im Verbindungs/Übergangsbereich von Rückenlehne (3) und Sitzfläche (2) schwenkbar gelagert ist;
b. wenigstens ein Teil des Polsters (8, 11) der Rückenlehne (3) ist mit dem Reboard-Sitzbügel (4) verbunden und mit diesem Sitzbügel (4) verschwenkbar;
c. der Reboard-Sitzbügel (4) ist in einem Stauzustand im wesentlichen parallel zur Rückenlehne (3) angeordnet;
d. der Reboard-Sitzbügel (4) ist aus dem Stauzustand in einen Reboard-Nutzzustand verschwenkbar, in dem er eine Winkelstellung zwischen den Ebenen der Rückenlehne (3) und der Sitzfläche (2) einnimmt;
e. im Reboard-Nutzzustand bildet der mit dem Reboard-Sitzbügel (4) verbundene und mit diesem Sitzbügel verschwenkbare Teil des Polsters (8, 11) der Rückenlehne (3) die Sitzfläche eines Reboard-Kindersitzes.

## Beschreibung

Die Anmeldung betrifft einen Sitz für ein Verkehrsmittel, mit einer Sitzfläche und einer Rückenlehne.

In öffentlichen Verkehrsmitteln, insbesondere Flugzeugen, sind die Sitze zur Sicherung der Passagiere häufig mit Sicherheitsgurten, insbesondere Beckengurten, versehen.

Solche Beckengurte sind in der Regel ungeeignet zur Sicherung von Kleinkindern. Der Erfindung liegt daher die Aufgabe zu Grunde, einen Sitz der eingangs genannten Art zu schaffen, der einen sicheren Transport von Erwachsenen und Kindern ermöglicht.

Der erfindungsgemäße Sitz weist folgende Merkmale auf:
a. der Sitz weist einen Reboard-Sitzbügel auf, der im unteren Bereich der Rückenlehne und/oder im Verbindungs/Übergangsbereich von Rückenlehne und Sitzfläche schwenkbar gelagert ist;
b. wenigstens ein Teil des Polsters der Rückenlehne ist mit dem Reboard-Sitzbügel verbunden und mit diesem Sitzbügel verschwenkbar;
c. der Reboard-Sitzbügel ist in einem Stauzustand im wesentlichen parallel zur Rückenlehne angeordnet;
d. der Reboard-Sitzbügel ist aus dem Stauzustand in einen Reboard-Nutzzustand verschwenkbar, in dem er eine Winkelstellung zwischen den Ebenen der Rückenlehne und der Sitzfläche einnimmt;
e. im Reboard-Nutzzustand bildet der mit dem Reboard-Sitzbügel verbundene und mit diesem Sitzbügel verschwenkbare Teil des Polsters der Rückenlehne die Sitzfläche eines Reboard-Kindersitzes.

Zunächst seien einige im Rahmen der Erfindung verwendete Begriffe erläutert.

Der Begriff Reboard-Sitz bezeichnet einen Sitz, in dem kleine Kinder (vorzugsweise unter zwei Jahren) entgegen der üblichen Sitzrichtung transportiert werden können.

Der erfindungsgemäße Sitz weist einen integrierten Reboard-Kindersitz auf. Zu diesem Zweck ist ein Reboard-Sitzbügel vorgesehen, der diesen Reboard-Kindersitz trägt. Er ist im unteren Bereich der Rückenlehne oder im Verbindungs/Übergangsbereich von Rückenlehne und Sitzfläche schwenkbar gelagert. Die Schwenkbarkeit ist so ausgebildet, dass er von einen Stauzustand, in dem er im Wesentlichen parallel zur Rückenlehne angeordnet ist, in einen Reboard-Nutzzustand verschwenkbar ist, in dem die Ebene des Reboard-Sitzbügels zwischen den Ebenen der Rückenlehne und der Sitzfläche liegt. Im Stauzustand kann der Reboard-Sitzbügel beispielsweise den Rahmen der Rückenlehne bilden.

Das Rückenlehnenpolster oder wenigstens ein Teil davon ist mit dem Reboard-Sitzbügel verbunden und gemeinsam mit ihm verschwenkbar. Im Reboard-Nutzzustand bildet dieser Teil des Polsters die Sitzfläche eines Reboard-Kindersitzes.

Im Reboard-Nutzzustand bildet somit der verschwenkte Reboard-Sitzbügel den Rahmen eines Reboard-Kindersitzes. An diesem Rahmen ist der verschwenkbare Teil des Polsters der Rückenlehne als Sitzfläche befestigt. Im Rahmen der Erfindung ist es möglich, dass die Befestigung des verschwenkbaren Teils des Polsters der Rückenlehne ausschließlich am Reboard-Sitzbügel oder aber zusätzlich im unteren Bereich, am Sitz, insbesondere an dessen Rückenlehne, erfolgt.

Der Reboard-Sitzbügel soll im Stauzustand den Sitzkomfort für einen erwachsenen Passagier nicht oder allenfalls unwesentlich beeinträchtigen. Zu diesem Zweck kann vorgesehen sein, dass der Reboard-Sitzbügel im Stauzustand im Randbereich der Rückenlehne angeordnet ist oder die Rückenlehne seitlich sowie am oberen Rand umschließt. Er verläuft dann nicht durch den gepolsterten Bereich der Rückenlehne. Alternativ kann vorgesehen sein, dass der Reboard-Sitzbügel (insbesondere dessen oberer Rand) so tief in einer Aussparung der Rückenlehnenpolster versenkt wird, dass er den Sitzkomfort nicht beeinträchtigt.

Der Reboard-Sitzbügel ist vorzugsweise im Wesentlichen U-förmig ausgebildet. Bei einem Draufblick auf den Sitz weist er die Form eines umgedrehten U auf. Die beiden langen Schenkel des U sind im Seitenbereich der Rückenlehne angeordnet, der Boden des U im Bereich des oberen Randes der Rückenlehne.

Vorzugsweise ist der Reboard-Sitzbügel zusätzlich in einen Liegezustand verschwenkbar, in dem er im Wesentlichen parallel zur Sitzfläche angeordnet ist. In diesem Liegezustand verlängert der verschwenkbare Teil des Polsters der Rückenlehne die Sitzfläche des Sitzes weiter nach vorne. Wenn eine Sicherung von Babys und Kleinkindern nicht mehr erforderlich ist (beispielsweise nach Erreichen der Reiseflughöhe eines Flugzeugs), kann durch Verschwenken in den Liegezustand eine flache Liegefläche gebildet werden.

Der Reboard-Sitzbügel muss in der vorgesehen Winkelstellung des Reboard-Nutzzustands fixiert werden. Dies kann dadurch geschehen, dass sich der Reboard-Sitzbügel im Reboard-Nutzzustand auf den Armlehnen des Sitzes und/oder mit den Armlehnen des Sitzes verbundene Halteeinrichtungen abstützt. Beispielsweise können nach innen aus den Armlehnen hervorfahrbare Bolzen vorgesehen sein, die eine Auflagefläche für den Reboard-Sitzbügel bilden.

Der mit dem Reboard-Sitzbügel verschwenkbare Teil des Polsters der Rückenlehne ist vorzugsweise beidseitig gepolstert. Im Stauzustand des Reboard-Sitzbügels kann die dann von der Rückenlehne wegweisende Seite dieses Polsters als Rückenlehnenpolster für Erwachsene oder größere Kinder genutzt werden. Im Reboard-Nutzzustand sowie im Liegezustand wird die gegenüberliegende Seite des Polsters der Rückenlehne als Sitzfläche eines Reboard-Kindersitzes beziehungsweise als Liegefläche genutzt.

Der mit dem Reboard-Sitzbügel verschwenkbare Teil des Polsters weist vorzugsweise einen im Wesentlichen starren Kern auf. "Im Wesentlichen starr" bedeutet in diesem Zusammenhand, dass das Polster im Reboard-Nutzzustand hinreichend formstabil ist, um eine Sitzfläche für Babys und Kleinkinder zu bilden.

Der mit dem Reboard-Sitzbügel verschwenkbare Teil des Polsters der Rückenlehne ist bevorzugt zweiteilig ausgebildet. Die beiden Teile des Polsters sind schwenkbar miteinander verbunden. "Schwenkbar" bedeutet in diesem Zusammenhang eine Gelenkverbindung oder einfach eine flexible Verbindung der beiden Polsterteile. Es kann hier beispielsweise ein Materialabschnitt vorgesehen sein, der weniger starr ist als die übrigen Bereiche des Polsters. Der obere Teil dieses zweiteilig ausgebildeten Polsters ist mit einem oberen Bereich des Reboard-Sitzbügels schwenkbar verbunden. Der untere Teil des Polsters ist verschieblich mit dem unteren Bereich des Reboard-Sitzbügels verbunden. Beispielsweise kann er mittels geeigneter Führungen in Langlöchern des Reboard-Sitzbügels verfahrbar und gegebenenfalls in verschiedenen Stellungen fixierbar sein.

Im Stauzustand bilden die beiden Teile des Polsters vorzugsweise eine einheitliche Rückenlehne, sind also nicht oder kaum gegeneinander verschwenkt. Im Reboard-Nutzzustand werden die beiden Teile gegeneinander verschwenkt und der untere Bereich des unteren Teils des Polsters am Reboard-Sitzbügel nach oben gefahren, so dass sich eine Reboard-Sitzmulde ausbildet.

Der Reboard-Sitzbügel kann zusätzlich einen ausfahrbaren Sichtschutz aufweisen. Dieser kann beispielsweise aus einem Stoff gebildet sein und einen oder mehrere entsprechende verstellbare Spannbügel aufweisen. Er kann insbesondere im Liegezustand verwendet werden und im Kindersitz befindliche Kinder vor optischen Einflüssen und Zugluft schützen.

Erfindungsgemäß ist es bevorzugt, dass der Reboard-Sitzbügel und/oder der mit dem Reboard-Sitzbügel verschwenkbare Teil des Polsters der Rückenlehne Fixiervorrichtungen für einen Beckengurt des Sitzes aufweisen. Bei dieser Ausführungsform der Erfindung kann ein wesentlicher Teil der auf den Reboard-Sitz wirkenden Kräfte beim Bremsen des Verkehrsmittels oder im Falle eines Unfalls über den Gurt in das Sitzgestell abgeleitet werden.

Vorzugsweise ist die Länge der Sitzfläche des Sitzes verstellbar. Auf diese Art und Weise ist eine Anpassung an die Oberschenkellänge des Passagiers möglich. Vorzugsweise weist der Sitz Armlehnen auf, deren Abstand zueinander verstellbar ist. Durch Vermindern des Abstands der Sitzlehnen kann der Sitz für kleinere Kinder "enger" gemacht werden.

Der erfindungsgemäße Sitz kann beispielsweise in Flugzeugen, Bussen oder Bahnen verwendet werden.

Ein Ausführungsbeispiel der Erfindung wird im Folgenden anhand der Zeichnung beschrieben. Darin zeigen:
- Fig. 1: schematisch einen erfindungsgemäßen Sitz von der Seite, bei dem der Reboard-Sitzbügel in der Reboard-Nutzstellung ist;
- Fig. 2: eine entsprechende Ansicht des Sitzes von vorne;
- Fig. 3: einen erfindungsgemäßen Sitz mit dem Reboard-Sitzbügel im Stauzustand;
- Fig. 4-6: Ansichten des Sitzes mit unterschiedlicher Länge der Sitzfläche angepasst an die Oberschenkellänge der Benutzer;
- Fig. 7: die Benutzung des Sitzes im Reboard-Nutzzustand;
- Fig. 8: den Reboard-Sitz im Liegezustand;
- Fig. 9: eine Ansicht des Sitzes von oben mit einem Schnitt durch die Rückenlehne (Reboard-Sitzbügel in Staustellung); und

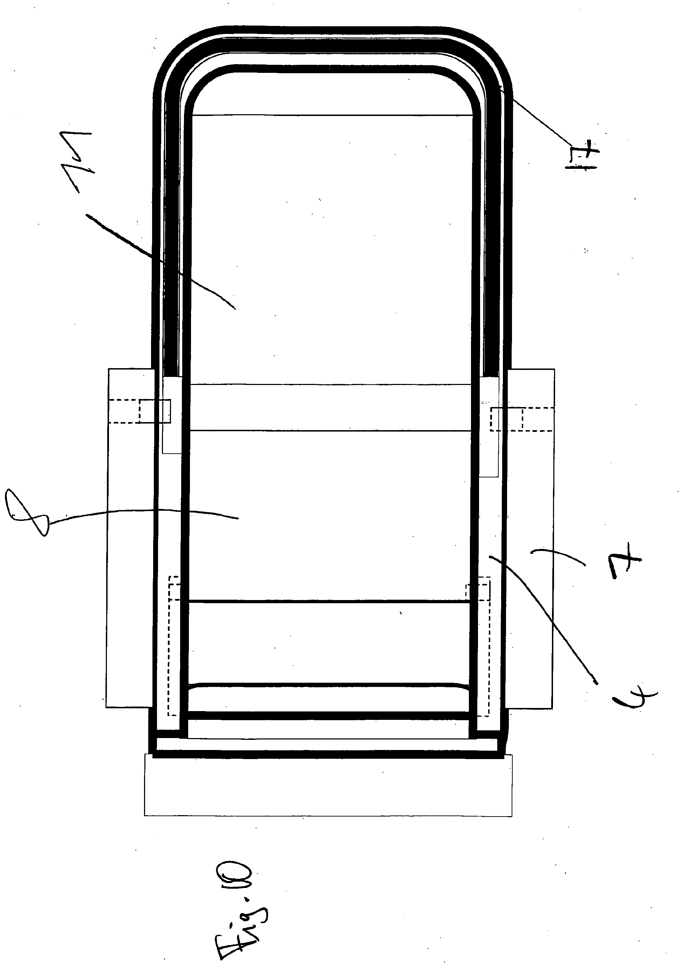

- Fig. 10: eine Ansicht des Sitzes von oben (Reboard-Sitzbügel in Reboard-Nutzstellung).

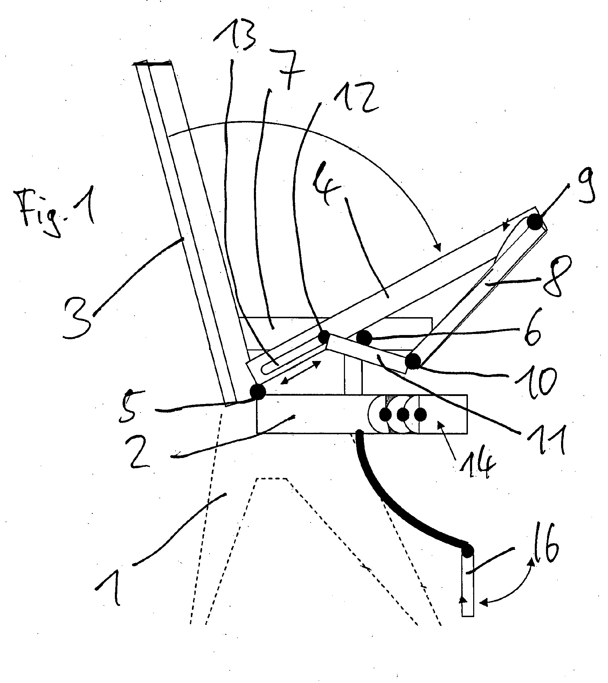

Der in Fig. 1 dargestellte Sitz weist ein bei 1 angedeutetes Grundgestell auf, mit dem er am Boden der Flugzeugkabine befestigt ist. Auf diesem Grundgestell 1 ist eine Sitzfläche 2 und eine Rückenlehne 3 angeordnet.

Die Rückenlehne 3 ist gegenüber der Sitzfläche 2 in bekannter Weise in der Neigung verstellbar.

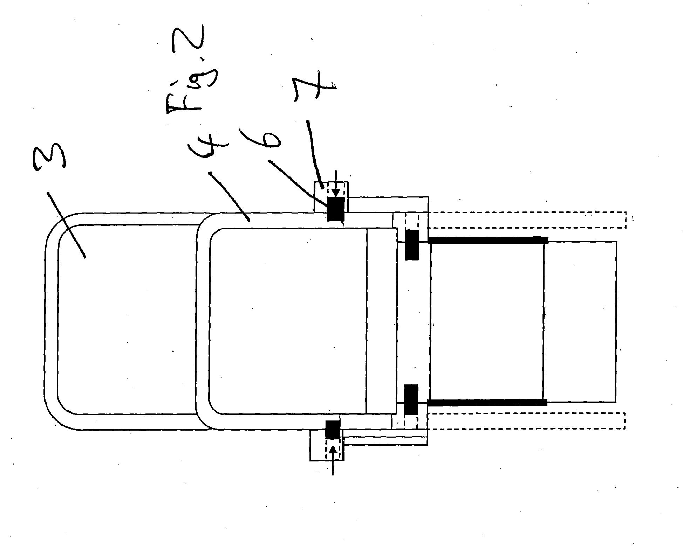

Ein Reboard-Sitzbügel 4 ist bei 5 (im Verbindungsbereich von Sitzfläche 2 und Rückenlehne 3) schwenkbar befestigt. In der in Fig. 1 gezeigten Darstellung befindet sich der Reboard-Sitzbügel 4 in der Reboard-Nutzstellung. Dabei stützt er sich auf verschieblichen Stützstiften 6 ab, die aus den Armlehnen 7 herausgefahren werden können (siehe Fig. 2).

In dem von dem U-förmigen Reboard-Sitzbügel 4 eingeschlossenen Innenraum ist ein zweiteiliges Polster angeordnet. Der obere Polsterteil 8 ist im oberen Bereich des Reboard-Sitzbügels 4 bei 9 schwenkbar befestigt. An dem oberen Polsterteil 8 ist bei 10 ein unterer Polsterteil 11 schwenkbar befestigt. Das entgegengesetzte (untere) Ende des unteren Polsterteils 11 ist bei 12 in einem Langloch 13 des Reboard-Sitzbügels 4 verschieblich gelagert.

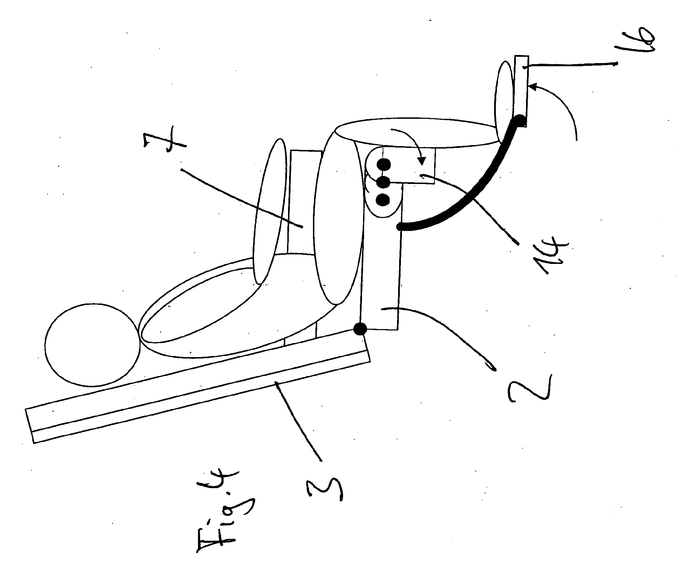

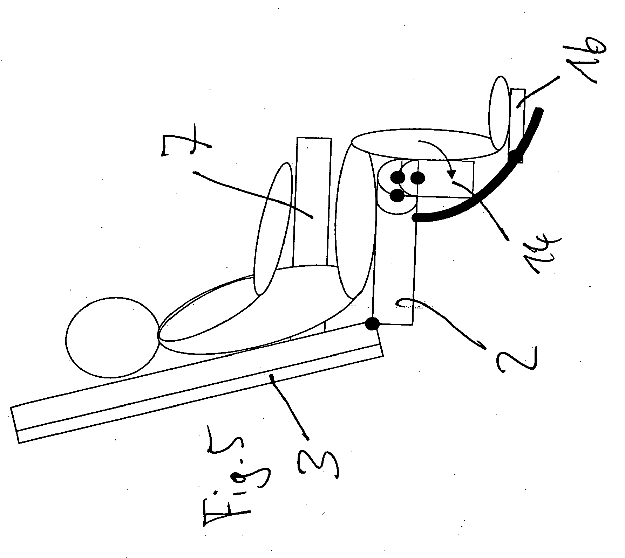

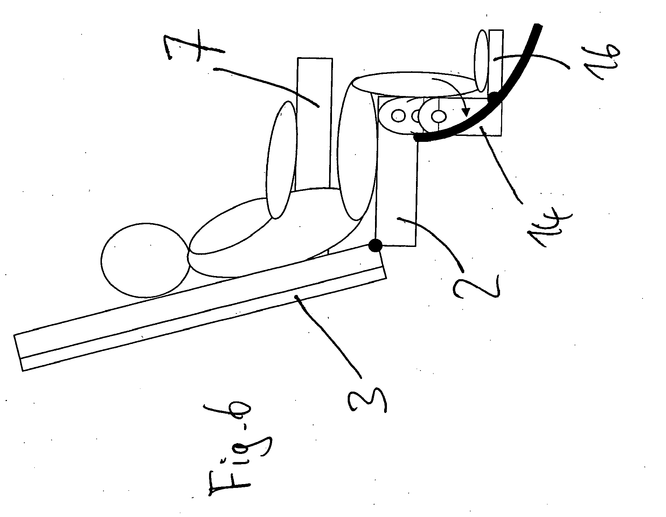

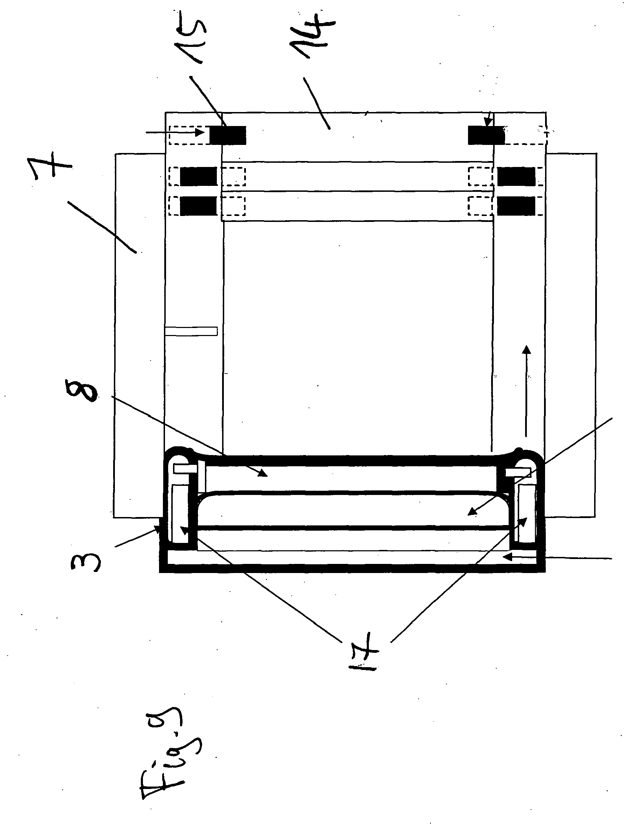

Die Länge der Sitzfläche 2 ist wie bei 14 angedeutet in der Länge veränderlich. Zu diesem Zweck können vordere Teilabschnitte der Sitzfläche 2 durch entsprechende Verriegelungsstifte 15 (siehe Fig. 9) ver- beziehungsweise entriegelt und im entriegelten Zustand nach unten zur Verkürzung der Sitzfläche abgeklappt werden. In den Fig. 4 bis 6 ist erkennbar, wie auf diese Art und Weise die Sitzfläche sukzessive abhängig von der Körpergröße des Passagiers verkürzt werden kann.

Der Sitz weist zusätzlich eine bei 16 schematisch dargestellte Fußstütze auf.

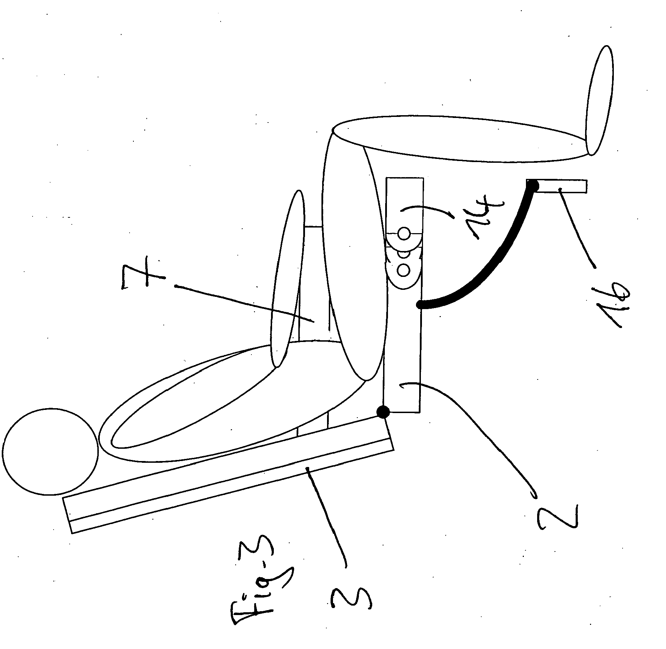

Die Fig. 3 bis 6 zeigen schematisch, wie der erfindungsgemäße Sitz in herkömmlicher Weise mit dem Reboard-Sitzbügel in der Staustellung genutzt werden kann. Fig. 3 zeigt die Nutzung durch einen Erwachsenen mit einer Körpergröße von 1,75 m, die Fig. 4 bis 6 die Nutzung durch Kinder mit Körpergrößen von 1,16 m, 1,04 m beziehungsweise 0,92 m. Es handelt sich hier um die statistischen Durchschnittsgrößen, von sechs-, vier- beziehungsweise zweijährigen Kindern. Dabei ist es möglich, die Armlehnen 7 nach innen zu verschieben und damit ihren Abstand zu verringern, um den Sitz bei der Nutzung durch Kinder zu verengen.

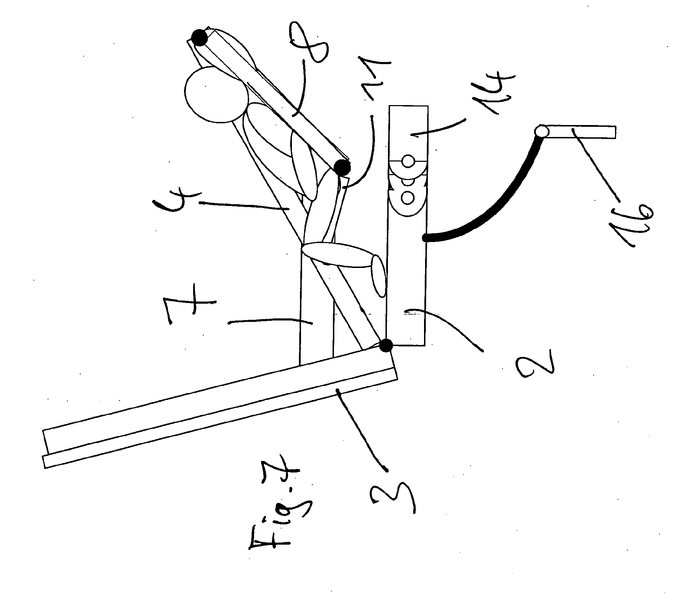

Wenn der Sitz für kleinere Kinder genutzt werden soll, wird er in die sogenannte Reboard-Nutzstellung gebracht. Zu diesem Zweck wird der Reboard-Sitzbügel 4 nach unten geklappt. Aus den Armlehnen 7 werden Haltestifte 6 ausgefahren, auf denen der Reboard-Sitzbügel 4 in der in Fig. 1 gezeigten Winkelstellung aufliegt. Anschließend werden die beiden Polsterteile 8, 11 aus der Ebene des Reboard-Sitzbügels 4 nach unten herausgeschwenkt, bis sie die in Fig. 1 gezeigte Endstellung einnehmen. Die untere Befestigung 12 des Sitzpolsters 11 gleitet dabei in den Langlöchern 13 nach oben. Die beiden Polsterteile 8, 11 bilden jetzt zusammen eine Reboard-Sitzschale, in der Babys oder Kleinkinder sicher sitzen können (siehe Fig. 7). Dabei ist vorgesehen, dass die Kinder in der Sitzschale durch einen in der Zeichnung nicht dargestellten Gurt gesichert werden. Zusätzlich ist es vorgesehen, dass der Beckengurt des Sitzes um die durch die Polsterteile 8, 11 gebildete Sitzschale herumgeführt wird (in der Zeichnung nicht dargestellt), um bei Bremsvorgängen beziehungsweise Unfällen auftretende Beschleunigungskräfte aufzunehmen und in das Grundgestell des Sitzes abzuleiten.

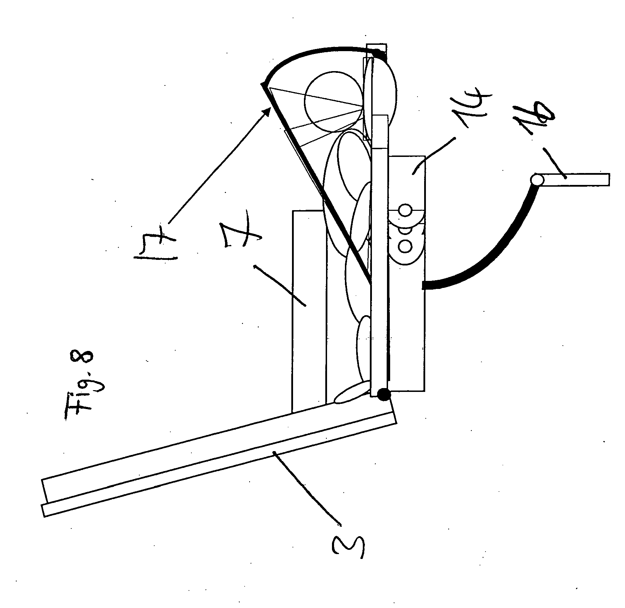

Nach Erreichen der Reiseflughöhe ist eine Sicherung von Babys und Kleinkindern wie bei Start und Landung nicht mehr erforderlich. Der Reboard-Sitzbügel kann dann in die in Fig. 8 gezeigte Liegestellung gebracht werden, in der er flach auf der Sitzfläche 2 aufliegt. Die Polsterteile 8, 11 werden dann wieder in die Ebene des Reboard-Sitzbügels 4 zurückbewegt und bilden eine einheitliche gerade Liegefläche für das Kind, deren Länge größer ist als die Länge der Sitzfläche 2 (siehe Fig. 8). Aus dem Reboard-Sitzbügel 4 kann ein Sichtschutz 17 ausgefahren werden, der Schutz gegen optische Einflüsse sowie Zugluft bieten kann.

## Patentansprüche

1. Sitz für ein Verkehrsmittel, mit einer Sitzfläche (2) und einer Rückenlehne (3), **gekennzeichnet durch** folgende Merkmale:
a. der Sitz weist einen Reboard-Sitzbügel (4) auf, der im unteren Bereich der Rückenlehne (3) und/oder im Verbindungs/Übergangsbereich von Rückenlehne (3) und Sitzfläche (2) schwenkbar gelagert ist;
b. wenigstens ein Teil des Polsters (8, 11) der Rückenlehne (3) ist mit dem Reboard-Sitzbügel (4) verbunden und mit diesem Sitzbügel (4) verschwenkbar;
c. der Reboard-Sitzbügel (4) ist in einem Stauzustand im wesentlichen parallel zur Rückenlehne (3) angeordnet;
d. der Reboard-Sitzbügel (4) ist aus dem Stauzustand in einen Reboard-Nutzzustand verschwenkbar, in dem er eine Winkelstellung zwischen den Ebenen der Rückenlehne (3) und der Sitzfläche (2) einnimmt;
e. im Reboard-Nutzzustand bildet der mit dem Reboard-Sitzbügel (4) verbundene und mit diesem Sitzbügel verschwenkbare Teil des Polsters (8, 11) der Rückenlehne (3) die Sitzfläche eines Reboard-Kindersitzes.

2. Sitz nach Anspruch 1, **dadurch gekennzeichnet, dass** der Reboard-Sitzbügel (4) im Stauzustand im Randbereich der Rückenlehne (3) angeordnet ist oder die Rückenlehne (3) seitlich sowie am oberen Rand umschließt.

3. Sitz nach Anspruch 1 oder 2, **dadurch gekennzeichnet, dass** der Reboard-Sitzbügel (4) im Wesentlichen U-förmig ausgebildet ist.

4. Sitz nach einem der Ansprüche 1 bis 3, **dadurch gekennzeichnet, dass** der Reboard-Sitzbügel (4) zusätzlich in einen Liegezustand verschwenkbar ist, in dem er im Wesentlichen parallel zur Sitzfläche (2) angeordnet ist.

5. Sitz nach einem der Ansprüche 1 bis 4, **dadurch gekennzeichnet, dass** sich der Reboard-Sitzbügel (4) im Reboard-Nutzzustand auf Armlehnen (7) des Sitzes und/oder mit den Armlehnen (7) des Sitzes verbundene Halteeinrichtungen (6) abstützt.

6. Sitz nach einem der Ansprüche 1 bis 5, **dadurch gekennzeichnet, dass** der mit dem Reboard-Sitzbügel (4) verschwenkbare Teil des Polsters (8, 11) der Rückenlehne beidseitig gepolstert ist.

7. Sitz nach einem der Ansprüche 1 bis 6, **dadurch gekennzeichnet, dass** der mit dem Reboard-Sitzbügel (4) verschwenkbare Teil des Polsters (8, 11) der Rückenlehne einen im wesentlichen starren Kern aufweist.

8. Sitz nach einem der Ansprüche 1 bis 7, **dadurch gekennzeichnet, dass** der mit dem Reboard-Sitzbügel (4) verschwenkbare Teil des Polsters (8, 11) der Rückenlehne zweiteilig ausgebildet ist, wobei ein oberer Teil (8) schwenkbar mit einem oberen Bereich des Reboard-Sitzbügels (4) verbunden ist, wobei die beiden Teile des Polsters (8, 11) schwenkbar miteinander verbunden sind, wobei der unterer Teil (11) des Polsters verschieblich mit dem unteren Bereich des Reboard-Sitzbügels (4) verbunden ist.

9. Sitz nach einem der Ansprüche 1 bis 8, **dadurch gekennzeichnet, dass** der Reboard-Sitzbügel (4) zusätzlich einen ausfahrbaren Sichtschutz (17) aufweist.

10. Sitz nach einem der Ansprüche 1 bis 9, **dadurch gekennzeichnet, dass** der Reboard-Sitzbügel (4)und/oder der mit dem Reboard-Sitzbügel verschwenkbare Teil des Polsters (8, 11) der Rückenlehne Fixiereinrichtungen für einen Beckengurt des Sitzes aufweisen.

11. Sitz nach einem der Ansprüche 1 bis 10, **dadurch gekennzeichnet, dass** die Länge der Sitzfläche (2) verstellbar ist.

12. Sitz nach einem der Ansprüche 1 bis 10, **dadurch gekennzeichnet, dass** er Armlehnen (7) aufweist, deren Abstand zueinander verstellbar ist.
